# EUROPÄISCHE PATENTSCHRIFT

(11) **EP 1 961 535 B1**
(45) Veröffentlichungstag und Bekanntmachung des Hinweises auf die Patenterteilung: **10.02.2010**
(21) Anmeldenummer: 07023443.0
(22) Anmeldetag: 04.12.2007
(51) Int. Cl.: B27D 5/00, B29C 63/00

(54) **Verfahren zum Anhaften von Kantenmaterial an Leichtbauplatten**
Method for sticking edging material to lightweight building boards
Procédé de collage de matériaux de rebord sur des panneaux de construction légers

(30) Priorität: 26.02.2007 EP 07003880
(43) Veröffentlichungstag der Anmeldung: 27.08.2008
(73) Patentinhaber: Homag Holzbearbeitungssysteme AG, 72296 Schopfloch (DE)
(72) Erfinder: Gauss, Achim, 72280 Dornstetten/Hallwangen (DE); Rathgeber, Peter, 72280 Dornstetten (DE); Schmid, Johannes, 72181 Starzach/Wachendorf (DE)
(74) Vertreter: HOFFMANN EITLE

(56) Entgegenhaltungen:
- EP-A- 1 640 128
- EP-A- 1 655 119
- DE-A1- 19 960 304
- DE-B3-102004 052 931

## Beschreibung

### Stand der Technik

Die Erfindung betrifft ein Verfahren zum Anhaften von Kantenmaterial an Leichtbauplatten, die zwei dünnwandige Decklagen und eine zwischen den Decklagen angeordnete Kernlage aus leichtem Füllmaterial aufweisen, nach dem Oberbegriff von Anspruch 1.

### Technisches Gebiet

Leichtbauplatte der hier zur Rede stehenden Art finden verbreitet Anwendung, beispielsweise zur Herstellung von Türen, zunehmend aber auch zur Herstellung von Tischplatten oder anderen Möbelteilen.

Ein Verfahren der eingangs genannten Art ist beispielsweise in der EP-A-1640128 offenbart. Bei diesem Verfahren wird zunächst eine Leichtbauplatte formatiert (in die gewünschte Rohform gebracht). Anschließend wird im Bereich der Schmalseite der Leichtbauplatte eine Ausnehmung eingefräst, und zwar sowohl in die Decklagen als auch in die Kernlage. Abschließend wird eine Stützkante in die Ausnehmung eingeleimt, die mit einer Dekorkante versehen ist oder noch versehen wird. Obgleich sich das Verfahren in der Praxis bewährt hat, ist es vergleichsweise aufwändig. Ferner erfordert das Verfahren eine genaue Abstimmung der Abmessungen der Ausnehmung auf die Abmessungen der Stützkante und Maßnahmen zur Sicherstellung einer gleichmäßigen Verleimung zwischen Stützkante und Decklagen.

Ferner offenbart die EP 1 655 119 A1 ein Verfahren zum Herstellen von Leichtbauplatten, bei dem ein Randabschnitt der Platte im Foldingverfahren als Kante umgeklappt wird.

### Darstellung der Erfindung

Es ist daher Aufgabe der Erfindung, ein gattungsgemäßes Verfahren bereitzustellen, das einen vereinfachten Verfahrensablauf und eine gute Verleimung zwischen Stützkante und Decklagen ermöglicht.

Diese Aufgabe wird erfindungsgemäß durch ein Verfahren nach Anspruch 1 gelöst. Besonders bevorzugte weiterbildungen der Erfindung sind in den abhängigen Ansprüchen angegeben.

Der Erfindung liegt der Gedanke zugrunde, das das Füllmaterial der Leichbauplatte vorteilhaft als Einbettung und nachgiebige Lagerung der Stützkante genutzt werden kann. Vor diesem Hintergrund ist erfindungsgemäß vorgesehen, dass bei einem gattungsgemäßen Verfahren die Stützkante im Bereich der Schmalfläche der Leichtbauplatte in einen Abschnitt zwischen zwei Decklagen eingebracht wird, ohne dass zuvor eine der Stützkante im wesentlichen entsprechende Aussparung mindestens einer Decklage und/oder der Kernlage in diesem Abschnitt erzeugt wurde. Auf diese Weise kann das im Stand der Technik erforderliche Ausfräsen einer Aussparung in Kernlage und Decklagen entfallen, was den Verfahrensablauf und auch die Konstruktion einer hierfür eingesetzten Maschine drastisch vereinfacht. Auch ergibt sich hieraus ein beschleunigter Verfahrensablauf.

Darüber hinaus wird die Stützkante nachgiebig in die Kernlage eingebettet, woraus sich eine ausreichende Gegenkraft ergibt, um die Dekorkante mit der Stützkante zu verleimen. Durch diese Verleimung (oder sonstige Haftverbindung) zwischen Dekorkante und Stützkante wird der Leichtbauplatte auch eine Stabilität im Bereich der Schmalseite verliehen, die für die meisten Anwendungsfälle ausreichend ist. Vor diesem Hintergrund ist gemäß der Erfindung vorgesehen, dass die Kernlage beim Einbringen der Stützkante zumindest abschnittsweise verformt wird, und zwar bevorzugt um einen Verformungsbetrag entsprechend der Dicke der Stützkante.

Obgleich die Stützkante und die Dekorkante im Rahmen der vorliegenden Erfindung auch als einstückiges Streifenmaterial (d. h. als integrierte Stütz- und Dekorkante) bereitgestellt werden können, hat es sich gemäß einer Weiterbildung der Erfindung als vorteilhaft erwiesen, dass Stützkante und Dekorkante separat bereitgestellt werden. Hierdurch muss bei wechselnden Dekorkanten (Dekoren) insgesamt deutliche weniger Kantenmaterial vorgehalten werden, da für alle Dekore dieselbe Stützkante verwendet werden kann und somit nur ein Stützkantenvorrat erforderlich ist.

Gemäß einer Weiterbildung der Erfindung ist vorgesehen, dass bei separater Bereitstellung von Stützkante und Dekorkante diese unmittelbar vor und/oder während des Einbringens der Stützkante in den Abschnitt zwischen zwei Decklagen miteinander verbunden, insbesondere verleimt werden. Auf diese Weise ergibt sich ein besonders kontinuierlicher Verfahrensablauf, und die beim Einbringen der Stützkante entstehende, elastische Rückstellkraft der Kernlage kann als Gegendruckkraft beim Verbinden der Stützkante und der Dekorkante verwendet werden, sodass keine separaten Gegendruckelemente oder dergleichen erforderlich sind. Ferner können Stütz- und Dekorkante in einem Arbeitsgang (beispielsweise in einem Umlauf um das Werkstück herum) angebracht werden, sodass sich die Anzahl der Verfahrensschritte vermindert.

Alternativ ist gemäß einer Weiterbildung der Erfindung vorgesehen, dass die Dekorkante erst nach dem Einbringen der Stützkante in den Abschnitt zwischen zwei Decklagen mit der Stützkante verbunden, insbesondere verleimt wird. Hierdurch lässt sich die Stützkante besonders präzise in dem Abschnitt zwischen zwei Decklagen positionieren und es kann ggf. erst zu einem sehr späten Zeitpunkt die jeweils gewünschte Dekorkante ausgewählt werden, was insbesondere bei Kleinserien- bzw. Einzelstückfertigung von Vorteil ist.

Um ein effizientes und dauerhaftes Verbinden von Stützkante und Dekorkante sowie ein sicheres Anbringen derselben an der Leichtbauplatte zu erzielen, ist es gemäß einer Weiterbildung der Erfindung vorgesehen, dass die Dekorkante auf der der Schmalfläche zugewandten Seite haftend gemacht wird, insbesondere mit Haftmittel versehen oder ein vorhandenes Haftmittel aktiviert wird, und dass die Dekorkante mit der haftenden Seite an die Stützkante und die Decklagen angedrückt wird.

Dabei können im Rahmen der vorliegenden Erfindung unterschiedlichste Haftmittel zum Einsatz kommen und auch verschiedene Haftmittel miteinander kombiniert werden. So hat es sich im Hinblick auf eine gute Abdichtung und Dauerhaftigkeit der hergestellten Leichtbauplatte als vorteilhaft erwiesen, dass gemäß einer Weiterbildung die haftende Seite der Dekorkante mit mindestens zwei Bereiche mit unterschiedlichen Haftmitteleigenschaften aufweist, wobei bevorzugt die den Decklagen zugeordneten Bereich der haftenden Seite ein Haftmittel aufweisen, das bessere Feuchtigkeitsabdichtende Eigenschaften besitzt als das Haftmittel in mindestens einem anderen Bereich. Beispielsweise kann somit im Bereich der Decklagen ein hochwertiger, feuchtigkeitsabdichtender Kleber eingesetzt werden, während in anderen Bereichen ein kostengünstiger Kleber verwendet werden kann, der lediglich für eine gute Haftverbindung sorgen muss.

Die Stützkante kann prinzipiell derart bemessen sein, dass sie den Abschnitt (lichten Abstand) zwischen zwei Decklagen genau ausfüllt. Gemäß einer Weiterbildung der Erfindung ist jedoch vorgesehen, dass die Stützkante derart in den Abschnitt zwischen zwei Decklagen eingebracht wird, dass sie von mindestens einer Decklage beabstandet ist. Hierdurch ergibt sich ein einfaches und störungsfreies Verfahren, das nicht durch mögliche Maßtoleranzen, insbesondere der Decklagen, beeinträchtigt wird. Allerdings kann es im Hinblick auf eine ausreichende Stabilität und Steifigkeit der Leichtbauplatte vorteilhaft sein, wenn gemäß einer Weiterbildung der Erfindung die der Stützkante zugewandte Fläche mindestens einer Decklage zumindest abschnittsweise mit Haftmittel versehen wird, bzw. dass alternativ oder zusätzlich mindestens eine einer Decklage zugewandte Fläche der Stützkante zumindest abschnittsweise mit Haftmittel versehen wird.

Die Stützkante kann im Rahmen der vorliegenden Erfindung prinzipiell aus einem beliebigen Material bestehen, beispielsweise aus Holz, Kunststoff oder verschiedenen Verbundwerkstoffen. Gemäß einer Weiterbildung der Erfindung hat es sich jedoch als besonders vorteilhaft erwiesen, dass die Stützkante ein Fasermaterial, insbesondere ein Kartonmaterial aufweist.

Dieses Material stellt für die hier vorgesehene Anwendung einen optimalen Kompromiss aus ausreichender Festigkeit und Steifigkeit, kostengünstiger Verfügbarkeit und leichter Verarbeitbarkeit dar. Dabei ist zu beachten, dass die Verwendung eines Fasermaterials insbesondere eines Kartonmaterials, als Stützkante eine eigenständige Zielrichtung im Rahmen der vorliegenden Erfindung darstellt und zwar in Kombination mit dem Oberbegriff von Anspruch 1, nicht jedoch notwendigerweise mit dem kennzeichnenden Teil von Anspruch 1.

Wie bereits oben stehend erwähnt wurde, kann bei dem erfindungsgemäßen Verfahren vollständig auf das Erzeugen einer Aussparung im Bereich der Schmalfläche verzichtet werden. Gemäß einer Weiterbildung der Erfindung ist jedoch vorgesehen, dass vor dem Einbringen der Stützkante im Bereich der Schmalfläche der Leichtbauplatte mindestens eine Aussparung mindestens einer Decklage und/oder der Kernlage erzeugt wird. Diese Aussparung zeichnet sich, wie bereits in Anspruch 1 definiert wurde, dadurch aus, dass ihre Form von derjenigen der Stützkante abweicht. Hierdurch lässt sich im Vergleich zu einer deckungsgleichen Ausgestaltung von Aussparung und Stützkante eine verbesserte Verleimung der Stützkante mit der Leichtbauplatte erzielen. Als Hauptgründe hierfür sind eine verbesserte Leimverteilung sowie eine gute Abstützung der Stützkante durch die Kernlage zu nennen, obgleich die vorliegende Erfindung nicht hierauf beschränkt ist.

Gemäß einer Weiterbildung der Erfindung ist vorgesehen, dass mindestens eine Randaussparung zumindest in einem Übergangsbereich zwischen mindestens einer Decklage und der Kernlage erzeugt wird. Hierdurch wird sichergestellt, dass beim Einschieben einer Stützkante keine Zerstörung der Kernlage im Bereich der Verleimung der Kernlage an der jeweiligen Decklage stattfindet, und dass darüber hinaus in diesem Übergangsbereich eine gute Verleimung der Stützkante mit der jeweiligen Decklage erfolgen kann. Dabei ist es besonders bevorzugt, dass die Randaussparung sowohl in der Kernlage als auch in der angrenzenden Decklage erzeugt wird, sodass sich im Bereich der jeweiligen Decklage eine saubere und definierte Anlagefläche für die Stützkante ergibt.

Die Randaussparung kann im Rahmen der vorliegenden Erfindung auf vielfältige Weise ausgestaltet werden. Gemäß einer Weiterbildung der Erfindung ist jedoch vorgesehen, dass die Randaussparung in einer Richtung senkrecht zur Schmalfläche tiefer in die Leichtbauplatte hineinreicht als die danach eingesetzte Stützkante. Somit verbleibt auch nach dem Einsetzen der Stützkante ein Freiraum im Bereich der Randaussparung, der beispielsweise zur Aufnahme überschüssigen Leims oder als Verformungsraum für die beim Einschieben der Stützkante verformte Kernlage dienen kann. Hierdurch ergibt sich wiederum eine saubere und fehlerfreie Verleimung der einzelnen Komponenten der Leichtbauplatte einschließlich der Stützkante.

Alternativ oder zusätzlich ist gemäß einer Weiterbildung der Erfindung vorgesehen, dass mindestens eine Randaussparung derart ausgebildet wird, dass die entsprechende Decklage in einer Kontaktfläche für die Stützkante mindestens eine Vertiefung aufweist. Eine derartige Vertiefung bzw. derartige Vertiefungen können als Leimreservoir dienen, in welches der Leim vor dem Einschieben der Stützkante aufgebracht wird. Beim Einschieben der Stützkante wird deren Oberfläche durch den in den Vertiefungen vorgesehenen Leim mit Leim benetzt, sodass sich eine gleichmäßige Leimfuge und somit eine sichere und dauerhafte Verleimung ergibt.

Ferner ist gemäß einer Weiterbildung der Erfindung vorgesehen, dass mindestens eine Mittenaussparung in der Kernlage erzeugt wird. Hierdurch lässt sich das Verformungsverhalten der Kernlage beim Einschieben der Stützkante gezielt steuern, beispielsweise indem die Anzahl und die Ausgestaltung der Mittenaussparung(en) in Abhängigkeit von den Abmessungen, der Steifigkeit, etc. der Stützkante oder auch in Abhängigkeit von den Eigenschaften des jeweiligen Leimes festgelegt wird. Dabei ist es besonders bevorzugt, dass die Mittenaussparung kammartig ausgeformt ist, da sich hierdurch ein besonders homogenes und dennoch stabiles Verformungsverhalten der Kernlage ergibt. Darüber hinaus trägt eine kammartige Ausgestaltung zu einer guten Leimverteilung bei.

Darüber hinaus ist gemäß einer Weiterbildung der Erfindung vorgesehen, dass mindestens eine Mittenaussparung in einer Richtung senkrecht zur Schmalfläche weniger tief in die Leichtbauplatte hineinreicht als die danach eingesetzte Stützkante. Hierdurch wird sichergestellt, dass die Kernlage zuverlässig und gleichmäßig ihre Einbettungswirkung für die Stützkante beibehält, sodass sich eine gute Verleimung der Stützkante in der Leichtbauplatte ergibt.

### Kurze Beschreibung der Zeichnungen

- Fig. 1: zeigt schematisch verschiedene Bearbeitungszustände einer Leichtbauplatte bei Durchführung einer ersten Ausführungsform des erfindungsgemäßen Verfahrens;
- Fig. 2: zeigt schematisch verschiedene Bearbeitungszustände einer Leichtbauplatte bei Durchführung einer zweiten Ausführungsform des erfindungsgemäßen Verfahrens;
- Fig. 3: zeigt schematisch verschiedene Bearbeitungszustände einer Leichtbauplatte bei Durchführung einer dritten Ausführungsform des erfindungsgemäßen Verfahrens;
- Fig. 4: zeigt schematisch verschiedene alternative Bearbeitungszustände der Leichtbauplatte bei Durchführung der in Fig. 3 gezeigten, dritten Ausführungsform.

### Ausführliche Beschreibung bevorzugter Ausführungsformen

Bevorzugte Ausführungsformen der vorliegenden Erfindung werden nachfolgend ausführlich unter Bezugnahme auf die begleitenden Zeichnungen beschrieben.

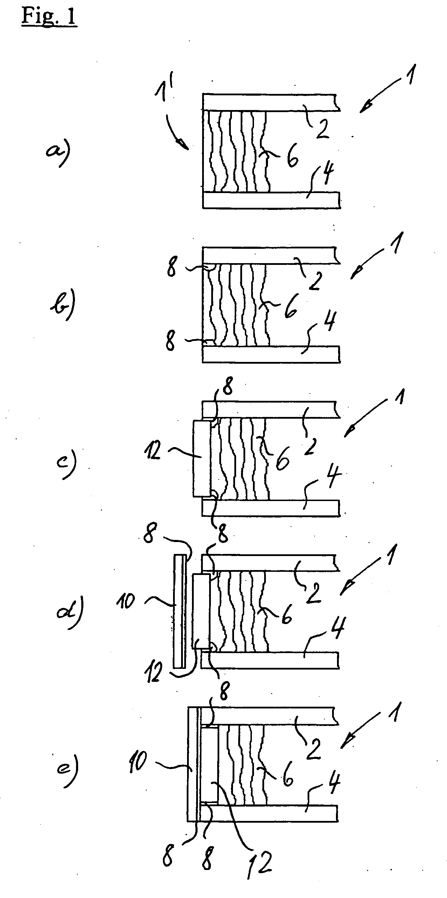

Zunächst wird eine erste Ausführungsform des erfindungsgemäßen Verfahrens unter Bezugnahme auf Fig. 1 beschrieben, die verschiedene Bearbeitungsphasen einer Leichtbauplatte 1 zeigt. Die Leichtbauplatte 1 besitzt in der vorliegenden Ausführungsform eine obere Decklage 2, eine untere Decklage 4 und eine dazwischen angeordnete Kernalge 6 aus Füllmaterial. Obgleich die vorliegende Erfindung nicht auf bestimmte Materialien beschränkt ist, können die dünnwandigen Decklagen 2, 4 beispielsweise durch eine Spanplatte gebildet sein, während die Kernlage 6 aus leichtem Füllmaterial beispielsweise einen Schaum, ein Papierwabenmaterial oder dergleichen aufweisen kann. Dabei besitzt die Kernlage 6 aus leichtem Füllmaterial in aller Regel eine geringere Dichte (ein geringeres Gewicht pro Volumeneinheit) als die jeweiligen Decklagen 2 und 4.

In Schritt a) des Verfahrens wird zunächst eine Leichtbauplatte 1 mit einem gewünschten Format (gewünschten Abmessungen) bereitgestellt, beispielsweise indem die Leichtbauplatte 1 aus einer großformatigen Leichtbauplatte herausgetrennt wird.

Anschließend wird in Schritt b) beispielsweise mittels einer Leimraupe ein Haftmittel 8, insbesondere Leim, auf die Innenflächen der Decklagen 2, 4 im Bereich der Schmalseite der Leichtbauplatte 1 aufgetragen.

Nun wird eine Stützkante 12 zugeführt (Schritt c)), die in der vorliegenden Ausführungsform aus einem Kartonstreifen besteht, obgleich selbstverständlich auch andere Materialien zum Einsatz kommen können. Die Stützkante 12 wird in den Abschnitt zwischen den beiden Decklagen 2, 4 im Bereich der Schmalfläche 1' der Leichtbauplatte 1 eingebracht, und zwar ohne dass zuvor eine der Stützkante im Wesentlichen entsprechende Aussparung der Decklagen 2, 4 oder der Kernlage 6 erzeugt wurde. Bei diesem Vorgang wird daher die Kernlage 6 verformt, und zwar um einen Verformungsbetrag entsprechend der Dicke der Stützkante 12. Gleichzeitig kommen hierbei die Stirnseiten der Stützkante 12 mit dem zuvor aufgetragenen Haftmittel 8 in Berührung, sodass der zwischen der Stützkante 12 und den Decklagen 2, 4 vorhandene Spalt zumindest abschnittsweise mit dem Haftmittel gefüllt wird. Dabei ist zu beachten, dass der Ort des Haftmittelauftrags im Rahmen der Erfindung vielfältig variiert werden kann.

Simultan zu dem Einbringen der Stützkante 12 in den Abschnitt zwischen den Decklagen 2, 4 wird eine Dekorkante 10 zugeführt, die auf ihrer der Stützkante 12 zugewandten Seite vorab mit einem Haftmittel versehen ist oder während des Zuführens mit einem Haftmittel versehen wird (Schritt d)). Anschließend wird die Dekorkante 10 an die Stützkante 12 angelegt, und zwar in der vorliegenden Ausführungsform bevor die Stützkante vollständig in den Abschnitt zwischen den Decklagen 2, 4 eingebracht ist. Dabei wird die Dekorkante 10 beispielsweise mit einer Andruckrolle (nicht gezeigt) in Richtung der Schmalfläche 1' der Leichtbauplatte 1 angedrückt, sodass in Zusammenwirken mit einer elastischen Rückstellkraft der leichten Kernlage 6 eine Haftverbindung zwischen der Dekorkante 10 und der Stützkante 12 herbeigeführt wird.

Ferner wird die Dekorkante 10 auch an die Stirnseiten der Decklagen 2, 4 angedrückt, um auch dort eine Haftverbindung zu erzielen, bis schließlich der in Schritt e) in Fig. 1 gezeigte Zustand erreicht ist. Hiermit ist das Anhaften des Kantenmaterials 10, 12 an die Leichtbauplatte 1 erfolgreich abgeschlossen.

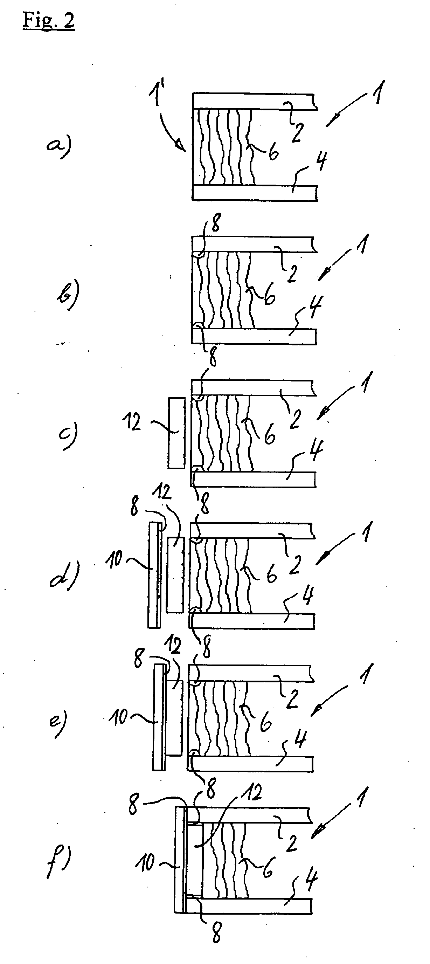

Eine zweite bevorzugte Ausführungsform des erfindungsgemäßen Verfahrens ist schematisch in Fig. 2 dargestellt. Dabei entsprechen die in Fig. 2 gezeigten Schritte a) und b) denjenigen aus Fig. 1.

Die in Fig. 2 gezeigte Ausführungsform unterscheidet sich von der in Fig. 2 gezeigten Ausführungsform jedoch wesentlich dadurch, dass die Stützkante 12 und die Dekorkante 10 bereits vor dem Einbringen der Stützkante 12 in den Abschnitt zwischen den Decklagen 2, 4 miteinander haftend verbunden werden, (Schritt e)), beispielsweise unter Einsatz hier nicht gezeigter Andruck- und Führungsrollen. Erst anschließend wird die Einheit aus Stützkante 12 und Dekorkante 10 derart an die Schmalfläche 1' der Leichtbauplatte 1 angelegt, dass die Stützkante 12 in den Abschnitt zwischen den Decklagen 2, 4 eingebracht und die Dekorkante 10 an die Stirnseiten der Decklagen 2, 4 angelegt wird. Das Einbringen der Stützkante 12 erfolgt dabei, wie in der obigen ersten Ausführungsform, ohne dass zuvor eine der Stützkante im Wesentlichen entsprechende Aussparung der Decklagen 2, 4 oder der Kernlage 6 in diesem Abschnitt erzeugt wurde. Dementsprechend ergibt sich auch bei diesem Verfahrensschritt eine Verformung der Kernlage 6 entsprechend der Dicke der Stützkante 12.

Im Rahmen der vorliegenden Erfindung sind selbstverständlich auch weitere Ausführungsformen möglich. Beispielsweise kann die Stützkante 12 auch vollständig in den Abschnitt zwischen den Decklagen 2, 4 eingebracht werden (d.h. bis sie mit der Stirnseite 1' der Leichtbauplatte 1 bündig ist), um erst anschließend die Dekorkante 10 haftend an die Stützkante 12 und die Stirnseiten der Decklagen 2, 4 anzulegen.

Darüber hinaus ist zu beachten, dass das erfindungsgemäße Verfahren auf unterschiedlichen Maschinentypen ausgeführt werden kann, beispielsweise auf einer Durchlaufmaschine (im Durchlauf) oder auf einer Stationärmaschine, bei welcher das Werkstück während des Verfahrensablaufs stationär angeordnet ist. Auch Mischformen beider Maschinenarten sind selbstverständlich im Rahmen der vorliegenden Erfindung möglich. Ferner kann das Anbringen von Stützkante und Dekorkante im Rahmen der vorliegenden Erfindung mit unterschiedlichsten Vorrichtungen erfolgen, beispielsweise mittels eines einzigen Aggregats, oder auch mittels unterschiedlicher Aggregate.

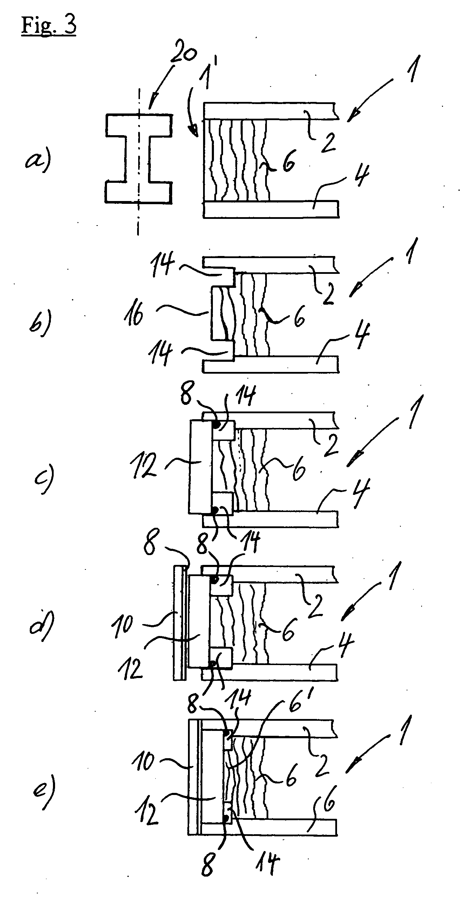

Eine dritte bevorzugte Ausführungsform des erfindungsgemäßen Verfahrens ist in Fig. 3 schematisch anhand verschiedener Bearbeitungszustände dargestellt. Auch diese Ausführungsform basiert auf der unter Bezugnahme auf die Fig. 1 erläuterten ersten Ausführungsform, wobei in beiden Ausführungsformen übereinstimmende Bauteile mit gleichen Bezugszeichen versehen sind. Ferner entsprechen die Verfahrensschritte c), d), und e) denjenigen aus Fig. 1.

Die in Fig. 3 veranschaulichte dritte Ausführungsform zeichnet sich primär dadurch aus, dass vor dem Einbringen der Stützkante 12 im Bereich der Schmalfläche 1' zwei Randaussparungen 14 und ein Mittenaussparung 16 erzeugt werden. Dies wird, wie in Fig. 3a) veranschaulicht, in der vorliegenden Ausführungsform mittels eines Stufenfräsers 20 erreicht, wobei anstelle des Stufenfräsers 20 auch vielfältige andere Bearbeitungseinheiten zum Einsatz kommen können, die eingerichtet sind, eine abgestufte Aussparung im Bereich der Schmalflächen 1' zu erzeugen, welche die Randaussparungen 14 und die Mittenaussparung 16 umfasst.

Wie in Fig. 3(b) am besten zu erkennen ist, sind die Randaussparungen 14 in einem Übergangsbereich zwischen der Kernlage 6 und der jeweiligen Decklage 2 bzw. 4 derart vorgesehen, dass sie sowohl in die Kernlage 6 als auch in die angrenzende Decklage 2 bzw. 4 hineinreichen. Dabei weisen die Randaussparungen 14 eine deutlich größere Eindringtiefe in die Leichtbauplatte auf als die Mittenaussparung 16. Genauer gesagt reichen die Randaussparungen 14 in der vorliegenden Ausführungsform in einer Richtung senkrecht zur Schmalfläche 1' tiefer in die Leichtbauplatte hinein als die danach eingesetzte Stützkante 12, was am besten anhand von Fig. 3e) ersichtlich ist. Auf diese Weise können die Randaussparungen 14 zuverlässig als Leimreservoir dienen und für eine gleichmäßige und zwängungsfreie Verteilung des auf die Stützkante 12, die Decklagen 2, 4 und/oder die Kernlage 6 aufgebrachten Leims 8 (vgl. Fig. 3(c), (d), und (e)) sorgen.

Demgegenüber reicht die Mittenaussparung 16 in der Richtung senkrecht zur Schmalfläche 1' weniger tief in die Leichtbauplatte hinein als die danach eingesetzte Stützkante 12. Dies führt dazu, dass sich im fertig gestellten Zustand der Leichtbauplatte 1 gemäß Fig. 3(e) eine komprimierte Zone 6' ergibt, in welcher die Kernlage 6 zumindest örtlich komprimiert ist. Hierdurch ergibt sich ein sicheres und stabiles Einführen und Positionieren der Stützkante in die Leichtbauplatte 1, was insbesondere in Verbindung mit einer parallelen Aufbringung der Dekorkante 10 vorteilhaft ist.

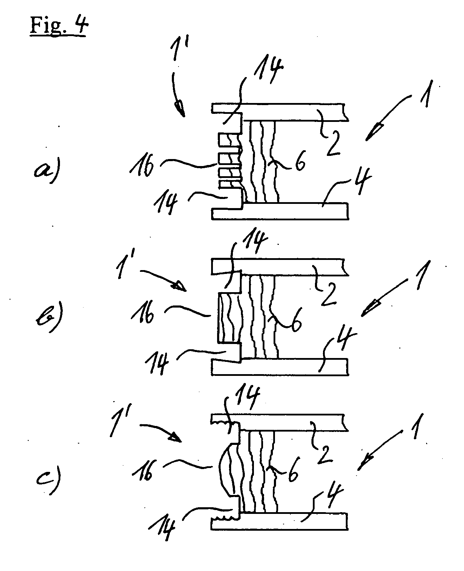

Die Anordnung und Ausgestaltung der Randaussparungen 14 und der Mittenaussparung 16 können im Rahmen der vorliegenden Erfindung vielfältig variiert werden, wobei verschiedene beispielhafte Ausgestaltungen in Fig. 4 schematisch dargestellt sind. Wie in Fig. 4(a) zu erkennen ist, kann die Mittenaussparung 16 beispielsweise kammartig ausgeformt sein, was das Ausbreitungsverhalten eines hier aufgetragenen Leims (nicht gezeigt) verbessert und ein gezieltes Verformungsverhalten ermöglicht.

Bei der in Fig. 4(b) gezeigten Ausgestaltung verjüngen sich die Randaussparungen 14 zur Schmalfläche 1' hin, sodass sich im Bereich des "Hinterschnitts" zusätzliche Leimverteilungsräume ergeben, die einen weiter verbesserten Verbund zwischen Stützkante (nicht gezeigt) und Decklagen 2, 4 ermöglichen.

Bei der in Fig. 4(c) gezeigten Ausgestaltung weist die Mittenaussparung 16 eine gekrümmte Form auf, und die Randaussparungen 14 sind derart ausgebildet, dass die entsprechende Decklage 2 bzw. 4 in einer Kontaktfläche für die Stützkante 12 mehrere Vertiefungen aufweist. Diese Vertiefungen können beispielsweise als Leimreservoir dienen, in welche der jeweilige Leim (nicht gezeigt) vor dem Einbringen der Stützkante eingebracht wird und die ebenfalls während des Einschiebevorganges der jeweiligen Stützkante als Ausgleichsraum zur Leimverteilung dienen können.

## Patentansprüche

1. Verfahren zum Anhaften von Kantenmaterial (10, 12) an Leichtbauplatten (1), die zwei dünnwandige Decklagen (2, 4) und eine zwischen den Decklagen angeordnete Kernlage (6) aus leichtem Füllmaterial aufweisen, mit den Schritten:
Bereitstellen einer Leichtbauplatte (1), einer Dekorkante (10) und einer Stützkante(12),
Zuführen zumindest einer Stützkante (12) und bevorzugt auch einer Dekorkante (10) zu der Leichtbauplatte, und
Anhaften der Dekorkante (10) und/oder der Stützkante (12) im Bereich einer Schmalfläche (1') der Leichtbauplatte (1),
**dadurch gekennzeichnet, dass**
die Stützkante (12) im Bereich der Schmalfläche (1') der Leichtbauplatte (1) in einen Abschnitt zwischen zwei Decklagen (2, 4) eingebracht wird, ohne dass zuvor eine der Stützkante im wesentlichen entsprechende Aussparung mindestens einer Decklage und/oder der Kernlage in diesem Abschnitt erzeugt wurde, wobei die Kernlage (6) beim Einbringen der Stützkante (12) zumindest abschnittsweise verformt wird.

2. Verfahren nach Anspruch 1, **dadurch gekennzeichnet, dass** die Kernlage (6) beim Einbringen der Stützkante (12) um einen Verformungsbetrag entsprechend der Dicke der Stützkante (12) verformt wird.

3. Verfahren nach Anspruch 1 oder 2, **dadurch gekennzeichnet, dass** Stützkante (12) und Dekorkante (10) separat bereitgestellt werden, und dass diese bevorzugt unmittelbar vor und/oder während des Einbringens der Stützkante (12) in den Abschnitt zwischen zwei Decklagen (2, 4) miteinander verbunden, insbesondere verleimt werden.

4. Verfahren nach Anspruch 1 oder 2, **dadurch gekennzeichnet, dass** Stützkante (12) und Dekorkante (10) separat bereitgestellt werden, und dass die Dekorkante (10) bevorzugt nach dem Einbringen der Stützkante (12) in den Abschnitt zwischen zwei Decklagen (2, 4) mit der Stützkante (12) verbunden, insbesondere verleimt wird.

5. Verfahren nach einem der vorhergehenden Ansprüche, **dadurch gekennzeichnet, dass** die Dekorkante (10) auf der der Schmalfläche (1') zugewandten Seite haftend gemacht wird, insbesondere mit Haftmittel (8) versehen oder ein vorhandenes Haftmittel (8) aktiviert wird, und dass die Dekorkante (10) mit der haftenden Seite an die Stützkante (12) und die Decklagen (2, 4) angedrückt wird.

6. Verfahren nach Anspruch 5, **dadurch gekennzeichnet, dass** die haftende Seite der Dekorkante (10) mindestens zwei Bereiche mit unterschiedlichen Haftmitteleigenschaften aufweist, wobei bevorzugt die den Decklagen (2, 4) zugeordneten Bereiche der haftenden Seite ein Haftmittel aufweisen, das bessere feuchtigkeitsabdichtende Eigenschaften besitzt als das Haftmittel in mindestens einem anderen Bereich.

7. Verfahren nach einem der vorhergehenden Ansprüche, **dadurch gekennzeichnet, dass** die Stützkante (12) derart in den Abschnitt zwischen zwei Decklagen (2, 4) eingebracht wird, dass sie von mindestens einer Decklage (2, 4) beabstandet ist.

8. Verfahren nach einem der vorhergehenden Ansprüche, **dadurch gekennzeichnet, dass** die der Stützkante (12) zugewandte Fläche mindestens einer Decklage (2, 4) zumindest abschnittsweise mit Haftmittel (8) versehen wird.

9. Verfahren nach einem der vorhergehenden Ansprüche, **dadurch gekennzeichnet, dass** mindestens eine Fläche der Stützkante (12), die einer Decklage (2, 4) zugewandt ist, zumindest abschnittsweise mit Haftmittel (8) versehen wird.

10. Verfahren nach einem der vorhergehenden Ansprüche, **dadurch gekennzeichnet, dass** die Stützkante (12) ein Fasermaterial, insbesondere ein Kartonmaterial, aufweist.

11. Verfahren nach einem der vorhergehenden Ansprüche, **dadurch gekennzeichnet, dass** vor dem Einbringen der Stützkante (12) im Bereich der Schmalfläche (1') der Leichtbauplatte (1) mindestens eine Aussparung (14, 16) mindestens einer Decklage (2, 4) und/oder der Kernlage (6) erzeugt wird.

12. Verfahren nach Anspruch 11, **dadurch gekennzeichnet, dass** mindestens eine Randaussparung (14) zumindest in einem Übergangsbereich zwischen mindestens einer Decklage (2, 4) und der Kernlage (6) erzeugt wird, wobei die Randaussparung (14) bevorzugt sowohl in der Kernlage (6) als auch in der angrenzenden Decklage (2, 4) erzeugt wird.

13. Verfahren nach Anspruch 12, **dadurch gekennzeichnet, dass** mindestens eine Randaussparung (14) in einer Richtung senkrecht zur Schmalfläche (1') tiefer in die Leichtbauplatte hineinreicht als die danach eingesetzte Stützkante (12).

14. Verfahren nach Anspruch 12 oder 13, **dadurch gekennzeichnet, dass** mindestens eine Randaussparung (14) derart ausgebildet wird, dass die entsprechende Decklage (2, 4) in einer Kontaktfläche für die Stützkante (12) mindestens eine Vertiefung aufweist.

15. Verfahren nach einem der Ansprüche 11 bis 14, **dadurch gekennzeichnet, dass** mindestens eine Mittenaussparung (16) in der Kernlage (6) erzeugt wird, die bevorzugt kammartig ausgeformt ist.

16. Verfahren nach Anspruch 15, **dadurch gekennzeichnet, dass** mindestens eine Mittenaussparung (16) in einer Richtung senkrecht zur Schmalfläche (1') weniger tief in die Leichtbauplatte hineinreicht als die danach eingesetzte Stützkante (12).

## Claims

1. Process for adhesion of edging material (10, 12) to lightweight building panels (1) which have two thin-walled cover layers (2, 4) and a core layer (6) made from lightweight filling material arranged between the cover layers, having the steps:
providing a lightweight building panel (1), a decorative edge (10) and a supporting edge (12),
supplying at least one supporting edge (12) and preferably also a decorative edge (10) to the lightweight building panel, and
adhering the decorative edge (10) and/or the supporting edge (12) in the region of a narrow surface (1') of the lightweight building panel (1),
**characterised in that**
the supporting edge (12) in the region of the narrow surface (1') of the lightweight building panel (1) is introduced into a section between two cover layers (2, 4) without a recess of at least one cover layer and/or of the core layer essentially corresponding to the supporting edge having been produced in this section beforehand, wherein the core layer (6) is deformed at least in some sections when introducing the supporting edge (12).

2. Process according to claim 1, **characterised in that** the core layer (6) is deformed by an amount of deformation corresponding to the thickness of the supporting edge (12) when introducing the supporting edge (12).

3. Process according to claim 1 or 2, **characterised in that** supporting edge (12) and decorative edge (10) are provided separately, and **in that** they are connected to one another, in particular glued, preferably directly before and/or during the introduction of the supporting edge (12) into the section between two cover layers (2, 4).

4. Process according to claim 1 or 2, **characterised in that** supporting edge (12) and decorative edge (10) are provided separately, and **in that** the decorative edge (10) is connected to the supporting edge (12), in particular glued, preferably after introducing the supporting edge (12) into the section between two cover layers (2, 4).

5. Process according to one of the preceding claims, **characterised in that** the decorative edge (10) is rendered adhesive on the side facing the narrow surface (1'), in particular provided with adhesive (8) or an existing adhesive (8) is activated, and **in that** the decorative edge (10) is pressed with the adhesive side against the supporting edge (12) and the cover layers (2, 4).

6. Process according to claim 5, **characterised in that** the adhesive side of the decorative edge (10) has at least two regions with different adhesive properties, wherein preferably the regions of the adhesive side assigned to the cover layers (2, 4) have an adhesive which has better moisture-sealing properties than the adhesive in at least one other region.

7. Process according to one of the preceding claims, **characterised in that** the supporting edge (12) is introduced into the section between two cover layers (2, 4), such that it is distanced from at least one cover layer (2, 4).

8. Process according to one of the preceding claims, **characterised in that** the surface of at least one cover layer (2, 4) facing the supporting edge (12) is provided with adhesive (8) at least in some sections.

9. Process according to one of the preceding claims, **characterised in that** at least one surface of the supporting edge (12), which is facing a cover layer (2, 4), is provided with adhesive (8) at least in some sections.

10. Process according to one of the preceding claims, **characterised in that** the supporting edge (12) has a fibrous material, in particular a cardboard material.

11. Process according to one of the preceding claims, **characterised in that** before introducing the supporting edge (12) in the region of the narrow surface (1') of the lightweight building panel (1), at least one recess (14, 16) of at least one cover layer (2, 4) and/or of the core layer (6) is produced.

12. Process according to claim 11, **characterised in that** at least one edge recess (14) is produced at least in one transition region between at least one cover layer (2, 4) and the core layer (6), wherein the edge recess (14) is produced preferably both in the core layer (6) and in the adjoining cover layer (2, 4).

13. Process according to claim 12, **characterised in that** at least one edge recess (14) in a direction vertically to the narrow surface (1') extends deeper into the lightweight building panel than the supporting edge (12) inserted thereafter.

14. Process according to claim 12 or 13, **characterised in that** at least one edge recess (14) is formed such that the corresponding cover layer (2, 4) in one contact surface for the supporting edge (12) has at least one depression.

15. Process according to one of claims 11 to 14, **characterised in that** at least one central recess (16) is produced in the core layer (6) which is preferably shaped like a comb.

16. Process according to claim 15, **characterised in that** at least one central recess (16) in a direction vertically to the narrow surface (1') extends less deeply into the lightweight building panel than the supporting edge (12) inserted thereafter.

## Revendications

1. Procédé de collage de matériau de rebord (10, 12) sur des panneaux de construction allégés (1), présentant deux couches de couverture (2, 4) à paroi mince et une couche centrale (6) disposée entre les couches de couvertures et composée de matériau de remplissage léger, comprenant les étapes de :
fourniture d'une panneau de construction allégé (1), d'un rebord de décoration (10) et d'un rebord d'appui (12),
amenée d'au moins un rebord d'appui (12) et, de préférence, également d'un rebord de décor (10) au panneau de construction allégé , et
collage du rebord de décor (10) et/ou du rebord d'appui (12) dans la zone d'une face étroite (1') du panneau de construction allégé (1),
**caractérisé en ce que**,
dans la zone de la face étroite (1') du panneau de construction allégé (1), le rebord d'appui (12) est inséré dans un tronçon entre deux couches de couverture (2, 4), sans que, préalablement, un évidement, correspondant sensiblement au rebord d'appui, d'au moins une couche de couverture et/ou de la couche centrale ait été produit dans ce tronçon, la couche centrale (6) étant déformée, au moins par tronçons, lors de l'introduction du rebord d'appui (12).

2. Procédé selon la revendication 1, **caractérisé en ce que**, lors de l'introduction du rebord d'appui (12), la couche centrale (6) est déformée d'une valeur de déformation correspondant à l'épaisseur du rebord d'appui (12).

3. Procédé selon la revendication 1 ou 2, **caractérisé en ce que** le rebord d'appui (12) et le rebord de décor (10) sont fournis séparément, et **en ce que** ceux-ci sont reliés ensemble, en particulier collés, de préférence directement avant et/ou pendant l'introduction du rebord d'appui (12) dans le tronçon situé entre les deux couches de couverture (2, 4).

4. Procédé selon la revendication 1 ou 2, **caractérisé en ce que** le rebord d'appui (12) et le rebord de décor (10) sont fournis séparément, et **en ce que** le rebord de décor (10) est relié, en particulier collé, au rebord d'appui (12), de préférence après introduction du rebord d'appui (12) dans le tronçon situé entre les deux couches de couverture (2, 4).

5. Procédé selon l'une des revendications précédentes, **caractérisé en ce que** le rebord de décor (10) est rendu adhésif sur la face tournée vers la face étroite (1'), en particulier est muni d'adhésif (8) ou un adhésif (8) existant est activée, et **en ce que** le rebord de décor (10) est pressé, avec la face rendue adhésive, sur le rebord d'appui (12) et les couches de couverture (2, 4).

6. Procédé selon la revendication 5, **caractérisé en ce que** la face rendue adhésive de la couche de décor (10) présente au moins deux zones ayant des propriétés d'adhésif différentes, où, de préférence, les zones, associées aux couches de couverture (2, 4), de la face rendue adhésive présentent un adhésif ayant de meilleures propriétés d'isolation contre l'humidité que l'adhésif se trouvant dans au moins une autre zone.

7. Procédé selon l'une des revendications précédentes, **caractérisé en ce que** le rebord d'appui (12) est inséré dans le tronçon situé entre deux couches de couverture (2, 4) de manière qu'il se trouve à distance d'au moins une couche de couverture (2, 4).

8. Procédé selon l'une des revendications précédentes, **caractérisé en ce que** la face, tournée vers le rebord d'appui (12), d'au moins une couche de couverture (2, 4) est munie, au moins par tronçons, d'adhésif (8).

9. Procédé selon l'une des revendications précédentes, **caractérisé en ce qu'**au moins une face du rebord d'appui (12), tournée vers une couche de couverture (2, 4), est munie, au moins par tronçons, d'adhésif (8).

10. Procédé selon l'une des revendications précédentes, **caractérisé en ce que** le rebord d'appui (12) présente un matériau fibreux, en particulier un matériau de carton.

11. Procédé selon l'une des revendications précédentes, **caractérisé en ce que**, avant introduction du rebord d'appui (12) dans la zone de la face étroite (1') du panneau de construction allégé (1), au moins un évidement (14, 16) d'au moins une couche de couverture (2, 4) et/ou de la couche centrale (6) est créé.

12. Procédé selon la revendication 11, **caractérisé en ce qu'**au moins un évidement de bordure (14) est créé, au moins dans une zone de transition entre au moins une couche de couverture (2, 4) et la couche centrale (6), l'évidement de bordure (14) étant produit, de préférence tant dans la couche centrale (6) qu'également dans la couche de couverture (2, 4) limitrophe.

13. Procédé selon la revendication 12, **caractérisé en ce qu'**au moins un évidement de bordure (14), dans une direction perpendiculaire à la face étroite (1'), pénètre plus profondément dans le panneau de construction allégé que le rebord d'appui (12) inséré ensuite.

14. Procédé selon la revendication 12 ou 13, **caractérisé en ce qu'**au moins un évidement de bordure (14) est réalisé de manière que la couche de couverture (2, 4) correspondante présente au moins un creusement, dans une face de contact pour le rebord d'appui (12).

15. Procédé selon l'une des revendications 11 à 14, **caractérisé en ce qu'**au moins un évidement central (16), façonné de préférence à la manière d'un peigne, est réalisé dans la couche centrale (6).

16. Procédé selon la revendication 15, **caractérisé en ce qu'**au moins un évidement central (16) pénètre, dans une direction perpendiculaire à la face étroite (1'), moins profondément dans le panneau de construction allégé que le rebord d'appui (12) inséré ensuite.
